# EUROPÄISCHE PATENTSCHRIFT

(11) **EP 0 396 997 B1**
(45) Veröffentlichungstag und Bekanntmachung des Hinweises auf die Patenterteilung: **24.11.1993**
(21) Anmeldenummer: 90108186.9
(22) Anmeldetag: 28.04.1990
(51) Int. Cl.: B65G 65/00, B65G 1/14

(54) **Vorrichtung mit einer zur Bildung eines Stapels von Flächenbauteilen bestimmten Einrichtung und Aufnahmebehälter zum Lagern und Transportieren des Stapels**
Device with a unit to build a stack of flat parts and holder for storing and transporting the stack
Dispositif et moyens pour la formation d'une pile de pièces plates et récipient pour stocker et transporter la pile

(30) Priorität: 06.05.1989 DE 3914924
(43) Veröffentlichungstag der Anmeldung: 14.11.1990
(73) Patentinhaber: THYSSEN INDUSTRIE AG, 45128 Essen (DE)
(72) Erfinder: Conz, Martin, D-3500 Kassel (DE); Schmale, Erhard, D-3549 Breuna-Wettesingen (DE); Gronau, Albert, D-3500 Kassel (DE)
(74) Vertreter: Freiherr von Schorlemer, Reinfried, Dipl.-Phys.

(56) Entgegenhaltungen:
- EP-A- 0 192 613
- AU-B- 588 293
- DE-A- 3 405 432
- DE-A- 3 617 600
- FR-A- 2 114 394
- US-A- 4 228 902

## Beschreibung

Die Erfindung betrifft eine Vorrichtung und einen Aufnahmebehälter der in den Oberbegriffen der Ansprüche 1 und 10 bezeichneten Gattungen.

Lager- und Transporteinrichtungen dieser Art werden z.B. am Ende eines Preßwerks zur Aufnahme der in diesem hergestellten Blechformteile benutzt, bei denen es sich insbesondere um empfindliche Außenhaut- bzw. Flächenbauteile von Kraftfahrzeugen wie Dächer, Türen, Kotflügel, Motorhauben, Kofferraumdeckel oder dergleichen handeln kann, die zwecks Vermeidung von Beschädigungen auch während des Transports zu einer anderen Produktionslinie voneinander getrennt gehalten werden müssen.

Bei einer bekannten Vorrichtung der eingangs bezeichneten Gattung (DE 34 05 432 A1) erfolgt die Stapelbildung mit Hilfe einer üblichen, in einer Be- und/oder Entladestation fest angeordneten Klinkenfördereinrichtung. Zur Lagerung und zum Transport des Stapels dient ein als Palette ausgebildeter Aufnahmebehälter, der verschiebbare Ablagekörper mit einander zugewandten, hakenförmigen Aufnahmeelementen aufweist, die zur Übernahme des Stapels zwischen die auf Abstand gehaltenen Flächenbauteile einschiebbar sind. Wie und mit welchen Mitteln die Ablagekörper in ihre zur Übernahme oder Abgabe des Stapels erforderliche Position gebracht werden, ist nicht ersichtlich.

Bei einer anderen Lager- und Transporteinrichtung (DE-PS 33 33 118) bilden der Aufnahmebehälter und die z.B. als Klinkensäulen ausgebildeten Stapelkörper eine zusammenhängende Baueinheit, die als Ganzes nicht nur zur Lagerung und zum Transport der Flächenbauteile, sondern auch zur Stapelbildung bzw. zum Entstapeln bestimmt ist. Wegen der erheblichen Stückzahlen der täglich anfallenden Flächenbauteile werden entsprechend viele Lager- und Transporteinrichtungen benötigt. Dies ist angesichts der mindestens zwei pro Einrichtung benötigten Klinkensäulen mit erheblichem Aufwand verbunden. Außerdem sind die Klinkensäulen wegen der Vielzahl der beweglichen Teile störanfällig. Insbesondere bei vorübergehender Aufstellung der Einrichtung im Freien ergeben sich häufig durch Korrosion oder dergleichen bedingte Betriebsstörungen, die teure Wartungsarbeiten erforderlich machen, zu Beschädigungen der Flächenbauteile führen oder gar einen zeitweiligen Stillstand des Preßwerks verursachen können.

Als Alternative für die beschriebenen Lager- und Transporteinrichtungen sind schließlich zum Lagern und zum Transport bestimmte Aufnahmebehälter bekannt, die keine besonderen Stapelbildungselemente aufweisen (DE-A- 34 35 941, US-A- 4 228 902 und 4 445 616). Derartige Aufnahmebehälter eigenen sich zwar auch zur maschinellen Bildung eines Stapels. Anders als bei den eingangs erläuterten Lager- und Transporteinrichtungen ist es aber nicht möglich, die Stapelbildung bzw. Entstapelung bei horizontal angeordneten Flächenbauteilen von oben her, d.h. über Kopf durchzuführen, so daß entweder auf komplizierten Bahnen geführte Werkzeuge für die Stapelbildung und/oder Zusatzeinrichtungen an den Aufnahmebehältern benötigt werden, um die Flächenbauteile nach der Stapelbildung gegen Herabfallen bzw. Beschädigung beim Transport zu sichern.

Demgegenüber liegt der Erfindung die Aufgabe zugrunde, die eingangs bezeichnete Vorrichtung und den eingangs bezeichneten Aufnahmebehälter so auszubilden, daß der beschriebene Prozeß weitgehend automatisch durchführbar, wenig störanfällig und mit konstruktiv vergleichsweise einfachen Aufnahmebehältern realisierbar ist.

Zur Lösung dieser Aufgabe dienen die kennzeichnenden Merkmale der Ansprüche 1 und 10.

Die Erfindung bringt den Vorteil mit sich, daß sowohl alle zur Stapelbildung als auch alle zur Übernahme bzw. Abgabe des Stapels seitens des Aufnahmebehälters erforderlichen Einrichtungen körperlich vom Aufnahmebehälter getrennt sind. Daher brauchen diese Einrichtungen am Ende des Preßwerks oder am Anfang einer anderen Produktionslinie nur jeweils einmal vorhanden sein, während zur Lagerung und zum Transport der Flächenbauteile konstruktiv einfache, robuste und daher gegen Verschleiß und Betriebsstörungen weitgehend unempfindliche Aufnahmebehälter verwendet werden können. Da die genannten Einrichtungen ferner an gemeinsamen Tragkörpern montiert sind, ergibt sich eine insgesamt konstruktiv einfache, an unterschiedlich große Flächenbauteile leicht anpaßbare Gesamtvorrichtung.

Weitere vorteilhafte Merkmale ergeben sich aus den Unteransprüchen.

Die Erfindung wird nachfolgend in Verbindung mit der beiliegenden Zeichnung an Ausführungsbeispielen näher erläutert. Es zeigen:
- Fig. 1: eine schematische Seitenansicht einer erfindungsgemäßen Lager- und Transporteinrichtung beim Beladen;
- Fig. 2: eine Draufsicht auf die Einrichtung nach Fig. 1;
- Fig. 3: eine der Fig. 1 entsprechende Seitenansicht der erfindungsgemäßen Einrichtung, jedoch nach dem Beladen und in vereinfachter Darstellung;
- Fig. 4: eine Draufsicht auf die Einrichtung nach Fig. 3;
- Fig. 5: eine schematische Seitenansicht einer zusätzlich an der Einrichtung nach Fig. 1 angebrachten Vorrichtung in vergrößertem Maßstab; und
- Fig. 6: eine schematische Draufsicht auf die Vorrichtung nach Fig. 5.

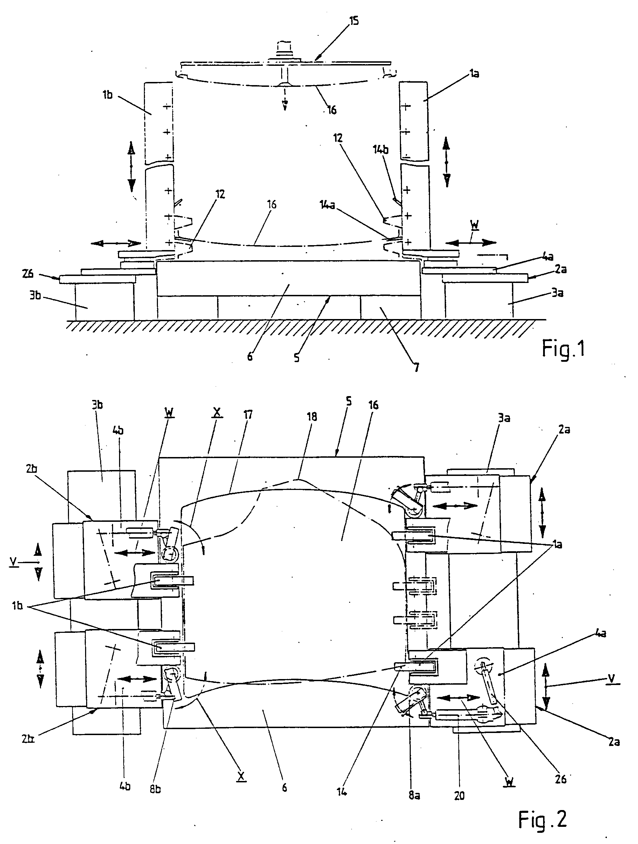

Die erfindungsgemäße Lager- und Transporteinrichtung enthält nach Fig. 1 und 2 eine Be- und/oder Entladestation, die vorzugsweise stationär am Ende eines Preßwerks oder am Anfang irgendeiner Produktionslinie oder dergleichen angeordnet wird. Die Be- und/oder Entladestation enthält mindestens zwei, im Ausführungsbeispiel vier an sich bekannte Stapelkörper in Form von Klinkensäulen 1a und 1b (vorzugsweise nach DE-PS 33 33 118), die jeweils paarweise einander gegenüberliegen. Jede klinkensäule 1 ist auf einem Schlitten 2a,b montiert, der als Ganzes auf einer z.B. horizontal am Erdboden verlegten Führungsschiene 3a,b und parallel zur Richtung eines Doppelpfeils v hin- und herfahrbar ist. Jeder Schlitten 2a,b weist außerdem einen senkrecht zur Richtung des Doppelpfeils v und parallel zum Erdboden (Doppelpfeil w) hin- und herschiebbaren Tragkörper 4a,b auf, auf dem eine zugehörige Klinkensäule 1a,b mit vertikal stehender Achse angeordnet ist.

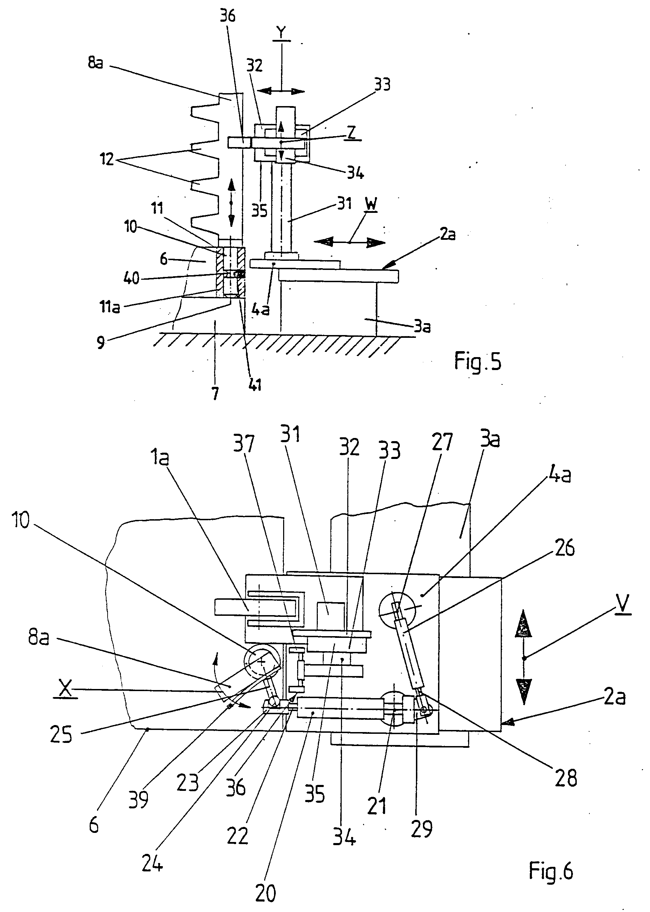

Die beiden Führungsschienen 3a,b sind parallel und mit einem solchen Abstand zueinander angeordnet, daß zwischen ihnen ein Aufnahmebehälter 5 angeordnet werden kann, der ein Bodenteil 6 mit Füßen 7 aufweist, so daß er z.B. mit einem Gabelstapler unterfaßt und in die Be- und/oder Entladestation transportiert oder aus dieser herausgefahren werden kann. Das Bodenteil 6 besitzt vorzugsweise einen rechteckigen oder quadratischen Querschnitt. Außerdem weist das Bodenteil 6 wenigstens zwei an gegenüberliegenden Seitenkanten angeordnete, im Ausführungsbeispiel vier Ablagekörper 8a,b auf, deren Achsen 9 (Fig. 5) vertikal und parallel zu den Achsen der Klinkensäulen 1 angeordnet sind. Das Bodenteil 6 wird so in die Be- und/oder Entladestation eingefahren, daß seine beiden die Ablagekörper 8a,b aufweisenden Seitenkanten parallel zu den Führungsschienen 3a,b angeordnet sind.

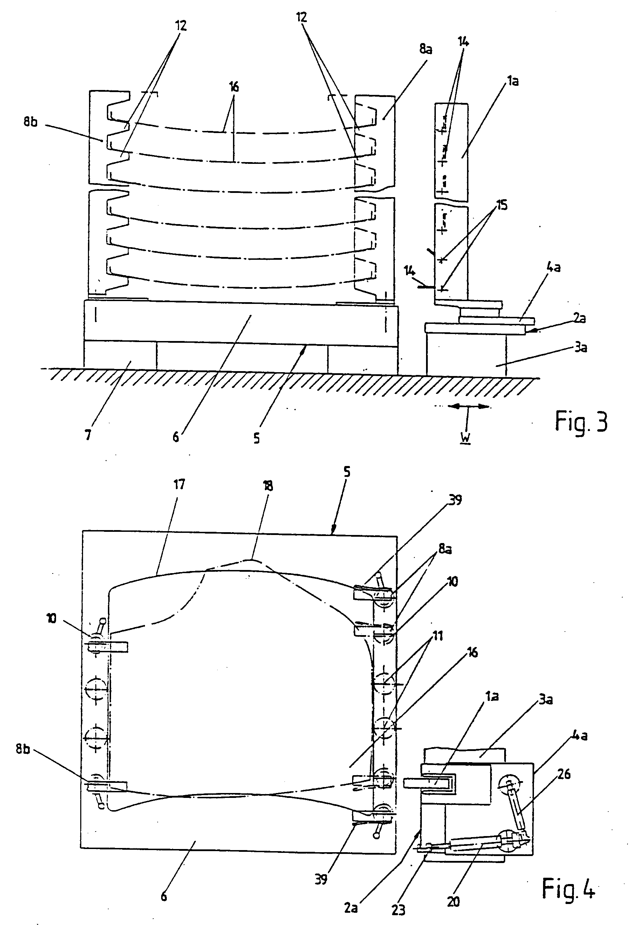

Wie insbesondere Fig. 4 bis 6 zeigen, weisen die Ablagekörper 8 an ihren unteren Enden zylindrische Lagerbolzen 10 auf, die in Bohrungen 11 des Bodenteils 6 um die Achsen 9 drehbar gelagert sind, wobei in die Bohrungen 11 zusätzlich Lagerbuchsen 11a eingesetzt werden können. Außerdem weist jeder Ablagekörper 8 mehrere, parallel zur Achse 9 beabstandete, vorzugsweise starr an ihm befestigte Tragelemente 12 auf, die einer Längskante des Ablagekörpers 8 ein zahnstangen- oder kammartiges Aussehen (Fig. 3 und 5) verleihen.

Die Stapelkörper 1 weisen bevorzugt in bekannter Weise (DE-A- 33 33 118) mehrere, parallel zu ihren Achsen beabstandete Aufnahmeelemente bzw. Klinken 14 (Fig. 3) auf. Diese sind um schematisch angedeutete Zapfen 15 schwenkbar gelagert und vorzugsweise in eine Ruhestellung (Fig.3, oben), in der sie in die jeweilige Klinkensäule 1 zurückgezogen sind, eine Aufnahmestellung (Fig. 3, zweite Klinke von unten), in der sie teilweise aus der Klinkensäule 1 herausgeschwenkt sind, und eine Tragstellung (Fig.3, unterste Klinke), in der sie vollends aus der Klinkensäule 1 herausragen, schwenkbar. Dabei ist mit Hilfe von Gegengewichten, Steuerarmen und dergleichen dafür gesorgt, daß sich die unterste Klinke 14 normalerweise in der Aufnahmestellung befindet, während alle übrigen Klinken 14 die Ruhestellung einnehmen. Wird nun mittels einer am Ende des Preßwerks angeordneten, Tragmagnete, Saugnäpfe oder dergleichen aufweisenden Hebevorrichtung 15 (Fig. 1) ein erstes Flächenbauteil 16 auf den untersten Klinken 14a (Fig. 1) der Klinkensäulen 1 abgelegt, dann werden diese durch das Gewicht des Flächenbauteils 16 in ihre Tragstellung verschwenkt, während gleichzeitig mit ihnen verbundene Hebelarme die darüber befindlichen Klinken 14b (Fig. 1) in ihre Aufnahmestellung schwenken. Wird danach ein weiteres Flächenbauteil 16 auf dieser Klinke 14b abgelegt, wiederholt sich dieser Vorgang. Dadurch können alle Flächenbauteile 16 von oben her, aber ohne gegenseitige Berührung, auf den Klinkensäulen übereinander gestapelt werden, ohne daß sie dabei durch die Klinken 14 behindert werden. Bei Anwendung starrer Klinken 14 wäre es dagegen erforderlich, die Flächenbauteile 16 von der Seite her auf die Klinken 14 aufzuschieben, was nur manuell geschehen und Beschädigungen zur Folge haben könnte.

Die beschriebene Lager- und Transporteinrichtung arbeitet im wesentlichen wie folgt:
Es wird zunächst mittels eines Gabelstaplers oder dergleichen ein Aufnahmebehälter 5 in die Be- und/oder Entladestation (Fig. 2) eingefahren und dort ggf. mit nicht dargestellten Mitteln feiert. Die Ablagekörper 8a,b werden dann in ihre Außerarbeitsstellung gebracht, in der sie außerhalb eines Stapelbereichs angeordnet sind, indem sie z.B. manuell in Richtung von Doppelpfeilen X gedreht werden. Unter "Stapelbereich" ist derjenige Bereich zu verstehen, der in Fig. 2 und 4 durch Umrißlinien 17,18 der zu stapelnden Flächenbauteile 16 bzw. deren Projektionen auf das Bodenteil 6 festgelegt ist. Dabei bezeichnet die durchgezogene Umrißlinie 17 beispielsweise die Motorhaube, die strichpunktierte Umrißlinie 18 dagegen die Hintertür eines Pkw.

Nach der Positionierung des Aufnahmebehälters 5 in der Be- und/oder Entladestation werden, beispielsweise ebenfalls manuell, die Schlitten 2a,b in Richtung des Doppelpfeils v so längs der Führungsschienen 3a,b verschoben und die Tragkörper 4a,b in Richtung der Doppelpfeile w so eingestellt, daß die Klinken 14, wenn sie ihre Aufnahme- oder Tragstellung einnehmen, in den Stapelhereich ragen. Anschließend erfolgt die an sich bekannte Stapelbildung, z.B. mit Hilfe der Hebevorrichtung 15.

Nachdem die gewünschte Anzahl von Flächenbauteilen 16 auf den Klinkensäulen 1a,b und deren Klinken 14 abgelegt ist, werden die Ablagekörper 8a,b in Richtung der Doppelpfeile x aus ihrer Außerarbeitsstellung (Fig. 2) in ihre Lager- und Transportstellung (Fig. 4) gedreht, wobei in Fig. 3 und 4 zur Vereinfachung der Zeichnung nur je einer der insgesamt vier Schlitten 2a,b dargestellt ist. Die Lager- und Transportstellung zeichnet sich dadurch aus, daß jetzt die Tragelemente 12 ebenfalls in den Stapelbereich ragen. Dabei ist die Anordung so getroffen, daß der Abstand der Tragelemente 12 parallel zu den Achsen 9 (Fig. 5) dem Abstand der Klinken 14 in deren Tragstellung entspricht und die Tragelemente 12 jeweils dicht unterhalb der noch auf den Klinken 14 befindlichen Flächenbauteile 16 zu liegen kommen. Dies ergibt sich aus den rechten Teilen der Fig. 1 und 2, in denen die Ablagekörper 8a schon teilweise zum gebildeten Stapel hingeschwenkt sind. Alternativ kann der Aufnahmebehälter älter 5 mit dem Gabelstapler 5 oder dergleichen so weit angehoben werden, daß die Flächenbauteile 16 von den Klinken 14 abgehoben, d.h. von den Tragelementen 12 direkt übernommen werden.

Abschließend werden die Tragkörper 4a,b in Richtung der Doppelpfeile w aus der in Fig. 1,2 dargestellten Position in die aus Fig. 3,4 ersichtliche, vom Stapelbereich zurückgezogene Position verschoben, wodurch die Flächenbauteile 16 gegebenenfalls von den Klinken 14 abgleiten und sich auf die dicht unter ihnen befindlichen Tragelemente 12 auflegen. Der Aufnahmebehälter 5 kann nun aus der Be- und/oder Entladestation herausgefahren und zur Zwischenlagerung oder zum Transport der Flächenbauteile 16 an einen beliebigen Ort benutzt werden, während die Klinkensäulen 1 und die Schlitten 2 in der Be- und/oder Entladestation verbleiben und zum Be- oder Entladen eines weiteren Aufnahmebehälters 5 verwendet werden können. Da die Aufnahmebehälter 5 im wesentlichen nur das Bodenteil 6 und die drehbaren Ablagekörper 8 mit ihren vorzugsweise starr angebrachten Tragelementen 12 umfassen, ergibt sich für sie eine äußerst robuste, verschleiß- und verwitterungsfeste sowie kostengünstige Bauform. Außerdem umfaßt die gesamte Lager- und Transporteinrichtung nur einen einzigen, in der ortsfesten Be- und/oder Entladestation angeordneten Satz von Klinkensäulen 1 und eine beliebige Vielzahl von austauschbaren, transportablen Aufnahmebehältern 5.

Die Entladung eines Aufnahmebenalters 5 kann an jedem beliebigen Ort und beispielsweise auch manuell vorgenommen werden. Vorzugsweise erfolgt die Entladung entsprechend der vorhergehenden Beschreibung, aber in umgekehrter Reihenfolge und ebenfalls in einer nach Fig. 1 bis 4 ausgebildeten Be- und/oder Entladestation. Dazu wird der Aufnahmebehälter 5 nach seiner Positionierung zunächst mittels eines Gabelstaplers oder dergleichen etwas angehoben, damit die vorher sämtlich in ihre Tragstellung gebrachten und entsprechend vorgeschobenen Klinken 14 dicht unterhalb der Flächenbauteile 16 bzw. der Tragelemente 12 zu liegen kommen, und dann wieder argesenkt, um die Flächenbauteile 16 auf den Klinken 14 abzulegen. Danach werden die Ablagekörper 8 in ihre Außerarbeitsstellung gedreht. Die dabei in bekannter Weise (DE-A-33 33 118) mit einer gemeinsamen Verriegelungsvorrichtung in ihrer Tragstellung gehaltenen Klinken 14 werden dann entriegelt, so daß die Flächenbauteile 16 jetzt mittels der Hebevorrichtung 15 nacheinander nach oben hin entnommen werden können, wobei die einzelnen Klinken 14 aufgrund ihrer Gegengewichte und Steuerarme jeweils in ihre Ruhestellung verschwenkt werden, sobald ein Flächenbauteil 16 endgültig von ihnen abgehoben ist.

Damit sich die Klinkensäulen und Ablagekörper 1 bzw. 8 nicht gegenseitig behindern, weist das Rahmenteil 6 nach Fig. 4 vorzugsweise eine Vielzahl von längs der zugehörigen Seitenkanten beabstandeten Bohrungen 11 auf, in die die Ablagekörper 8 wahlweise eingesteckt werden können, wie in Fig. 4 durch zwei zusätzlich und strichpunktiert dargestellte Ablagekörper angedeutet ist. Dadurch wird auch eine einfache Anpassung des Aufnahmebehälters 5 an die jeweils zu stapelnden Flächenbauteile 16 erleichtert. Aus demselben Grund können die Schlitten 2 parallel zu den Doppelpfeilen v verschoben und dadurch die Klinkensäulen 1 anders positioniert werden, wie in Fig. 2 durch zwei zusätzlich und strichpunktiert dargestellte Klinkensäulen angedeutet ist.

Zur weitgehenden Automatisierung des Be- und/oder Entladevorgangs ist es zweckmäßig, den Schlitten 2a,b Antriebsvorrichtungen in Form von Elektromotoren, Zylinder/Kolben-Anordnungen oder dergleichen zuzuordnen, die das Hin- und Herbewegen der Klinkensäulen 1 erleichtern. Weitere Antriebsvorrichtungen sind als Betätigungsmechanismen zur Hin- und Herbewegung der Ablagekörper 8 zugeordnet. Ein derartiger und in Fig. 2 und 4 nur schematisch dargestellter Betätigungsmechanismus ist beispielsweise in Fig. 6 vergrößert dargestellt. Das eine Ende eines Zylinders 20 einer ersten Zylinder/Kolben-Anordnung ist um eine parallel zur Achse der Klinkensäule 1a verlaufende Achse bei 21 schwenkbar am Tragkörper 4a gelagert. Das freie Ende der Kolbenstange 22 dieser Zylinder/Kolben-Anordnung ist mit einer U-förmigen Klaue 23 versehen, die zu einer Kugel 24 hin geöffnet ist, die am freien Ende eines radial vom Ablagekörper 8a wegragenden, an diesem starr befestigten Arms 25 vorgesehen ist. Das eine Ende eines Zylinders 26 einer zweiten Zylinder/Kolben-Anordnung ist um eine ebenfalls zur Achse der Klinkensäule 1a parallele Achse bei 27 schwenkbar am Tragkörper 4a gelagert. Ihre Kolbenstange 28 ist an eine über die Lagerstelle 21 hinausragende Verlängerung 29 des Zylinders 20 angelenkt. Daher ist es durch entsprechende Steuerung der zweiten Zylinder/Kolben-Anordnung möglich, den Zylinder 20 um den Punkt 21 zu verschwenken und dadurch die Klaue 23 mit der Kugel 24 zu koppeln (Fig. 6) bzw. von dieser zu entkoppeln (Fig. 4). Dagegen ist es durch entsprechende Steuerung der ersten Zylinder/Kolben-Anordnung bei in Koppelstellung befindlicher Klaue 23 möglich, die Kugel 24 hin- und herzubewegen und dadurch den Ablagekörper 8a in Richtung des Doppelpfeils x hin- und herzudrehen. Auf diese Weise können die Ablagekörper 8 nach dem Einfahren des Aufnahmebehälters 5 in die Be- und/oder Entladestation selbsttätig in die jeweils benötigten Stellungen gedreht werden.

Wie Fig. 5 und 6 zeigen, ist auf der Tragplatte 4a vorzugsweise zusätzlich eine in Fig. 1 bis 4 nicht dargestellte Vorrichtung zum selbsttätigen Umsetzen der Ablagekörper 8 montiert. Diese enthält einen Träger 31 mit vertikaler Achse, der eine Grundplatte 32 trägt, an der ein parallel zur Richtung eines Doppelpfeils y verschiebbares Gleitstück 33 gelagert ist, wobei der Doppelpfeil y vorzugsweise parallel zum Doppelpfeil w verläuft. An diesem Gleitstück 33 ist eine Führung 34 befestigt, längs derer ein Tragarm 34 parallel zur Richtung eines Doppelpfeils z verschiebbar ist, der vorzugsweise senkrecht zu den Doppelpfeilen v und y verläuft. Der Tragarm 35 trägt an einem freien, dem Stapelbereich zugewandten Ende einen Greifer 36 mit zwei parallel zur Richtung des Doppelpfeils v verschiebbaren Spannbacken 37. Dabei können alle beschriebenen Bewegungen manuell ausgeführt und mit nicht dargestellten Arretiervorrichtungen blockiert werden. Vorzugsweise sind jedoch zur Durchführung aller Bewegungen nicht dargestellte Antriebe in Form von Elektromotoren, Zylinder/Kolben-Anordnungen oder dergleichen vorgesehen.

Die anhand Fig. 5 und 6 beschriebene Vorrichtung arbeitet im wesentlichen wie folgt:
Ist ein Aufnahmebehälter 5 in die Be- und/oder Entladestation eingefahren und ist es aufgrund der zu stapelnden Flächenbauteile 16 erforderlich, einen oder mehrere Ablagekörper 8a in eine andere Bohrung 11 (Fig. 4) zu stecken, dann wird der Greifer 36 zunächst durch Bewegung des Gleitstücks 33 parallel zum Doppelpfeil y und des Tragarms 35 parallel zum Doppelpfeil z aus der in Fig. 6 dargestellten Außerarbeitsstellung in die aus Fig. 5 ersichtliche Arbeitsstellung gebracht, in der seine Spannbacken 37 den entsprechenden Ablagekörper 8a umgreifen. Anschließend werden die Spannbacken 37 betätigt, bis der Ablagekörper 8a fest zwischen ihnen eingespannt ist. Danach wird der Tragarm 35 parallel zum Doppelpfeil z angehoben und dadurch der Ablagekörper 8a aus der zugehörigen Bohrung 11 herausgezogen. Anschließend wird der Ablagekörper 8a durch Verschiebung des Schlittens 2a parallel zum Doppelpfeil v versetzt, bis er über der gewünschten Bohrung 11 angeordnet ist, und dann in diese Bohrung abgesenkt. Abschließend werden die Spannbacken 37 gelöst und die verschiedenen Teile wieder in die Außerarbeitsstellung zurückgezogen. Entsprechende Vorrichtungen können zum Versetzen der anderen Ablagekörper 8a,b vorgesehen sein.

Eine weitere, nicht dargestellte Vorrichtung könnte schließlich dazu dienen, die Klinkensäulen 1 wahlweise anzuheben oder abzusenken, um dadurch die Übergabe der Flächenbauteile 16 von ihnen auf die Ablagekörper 8 bzw. umgekehrt zu steuern. In diesem Fall wäre jede Klinkensäule 1 zweckmäßig mittels eines parallel zur Richtung des Pfeils z verschiebbar gelagerten Trägers am Tragkörper 4 montiert.

Um ein Verrutschen oder Herausfallen der Flächenbauteile 16 beim Transport des Aufnahmebehälters 5 zu verhindern, weisen zweckmäßig zumindest entweder die Ablagekörper 8a oder die Ablagekörper 8b an ihren Außenseiten montierte Sicherungselemente 39 in Form von Anschlagleisten oder dergleichen (Fig. 4 und 6) auf. Diese und die Trag- bzw. Aufnahmeelemente 12,14 sind vorzugsweise zumindest dort, wo sie mit den Flächenbauteilen in Berührung kommen, mit einer Schutzschicht, beispielsweise einer Kunststoffbeschichtung überzogen, um Beschädigungen der Flächenbauteile zu verhindern. Dabei versteht sich, daß der Abstand der sich gegenüberstehenden Ablagekörper 8a,b parallel zur Richtung des Pfeils w (Fig. 1) zumindest nach der Übernahme eines Stapels so gewählt wird, daß die Flächenbauteile 16 nicht nach der Seite herausfallen können und daher in dieser Richtung keine zusätzlichen Sicherungselemente benötigt werden.

Die Erfindung ist nicht auf die beschriebenen Ausführungsbeispiele beschränkt, die sich auf vielfache Weise abwandeln lassen. Dies gilt sowohl für die konstruktive Ausgestaltung der Klinkensäulen 1 und Ablagekörper 8 als auch für die verschiedenen bewegbaren Teile der Be- und/oder Entladestation. Für letztere wäre es im einfachsten Fall auch denkbar, die Schlitten 2 starr zu montieren, falls die Flächenbauteile 16 immer dieselbe Form und Größe aufweisen bzw. nur innerhalb so geringer Grenzen variieren, daß eine Verstellung der Klinkensäulen 1 parallel zum Doppelpfeil v nicht erforderlich ist. Weiterhin können alle beschriebenen Bewegungen halb- oder vollautomatisch durchgeführt werden, indem die Elektromotoren, Zylinder-/Kolben-Anordnungen oder dergleichen mit Hilfe einer Folgesteuerung betätigt werden, der nicht dargestellte Endschalter oder dergleichen zugeordnet sind. Weiterhin ist die Erfindung nicht auf Ablagekörper 8 mit starr angebrachten Tragelementen 12 beschränkt, da diese bei Bedarf auch verstellbar montiert sein können, um sie an unterschiedliche Formen der Flächenbauteile anzupassen. Dabei wäre es natürlich auch möglich, die Tragelemente auf jeder Seite des Aufnahmebehälters an einem als Ganzes drehbaren Teil vorzusehen, das z.B. verschiebbar oder um die Achse 9 (Fig. 5) drehbar am zugehörigen Ablagekörper 8a,b gelagert ist. Dadurch könnte das Vorbewegen der Tragelemente 12 in den Stapelbereich bzw. die entsprechende Zurückbewegung durch Verschiebung bzw. Drehung der genannten Teile anstatt durch Verdrehung oder Verschiebung der Ablagekörper 8a,b erfolgen. In ähnlicher Weise könnte vorgesehen sein, die Klinken 14 derart drehbar oder verschiebbar an den Stapelkörpern 1a,b anzuordnen, daß zur Herstellung ihrer Arbeits- bzw. Außerarbeitsstellung nicht der gesamte zugehörige Stapelkörper verschoben bzw. verdreht werden muß. Die dargestellte Anordnung wird jedoch wegen ihrer Einfachheit bevorzugt. Außerdem könnten andere als die dargestellten Stapelbildungselemente vorgesehen sein.

Weiterhin versteht sich, daß alle beschriebenen Bauteile bzw. Vorrichtungen je nach Anwendungszweck der erfindungsgemäßen Lager- und Transporteinrichtung einzeln oder in verschiedenen Kombinationen vorgesehen werden können. Dabei können die beschriebenen Bewegungen wahlweise Dreh-, Schwenk- oder Linearbewegungen oder dergleichen sein, indem beispielsweise die Ablagekörper 8 in Längsführungen des Rahmenteils 6 verschiebbar und feststellbar gelagert und/oder die Klinkensäulen 1 drehbar an den Tragkörpern 4 gelagert werden. Möglich ist ferner, die Aufnahmebehälter und/oder die Be- und/oder Entladestationen so auszubilden, daß sie mehrere, in Richtung des Pfeils v hintereinander liegende Stapel aus Flächenbauteilen 16 gleichzeitig aufnehmen und/oder stapeln bzw. entstapeln können. Außerdem kann gemäß Fig. 5 vorgesehen sein, die Lagerbolzen 10 in axialer Richtung mit dem Rahmenteil 6 zu verbinden, z.B. mittels in ihnen oder den Bohrungen 11 bzw. Lagerbuchsen 11a ausgebildeten Nuten 40 und in diese eingesetzten, durch Federn vorgespannten und im jeweils anderen Teil gelagerte Rastkugeln 41. Dabei können die Nuten 40 an zwei um 90° beabstandeten Stellen mit vergrößerten Aufnahmen für die Rastkugeln 41 versehen sein, um dadurch die Ablagesäulen 8 in ihren Außenarbeits- bzw. Lager- und Transportstellungen zu fixieren und gegen unbeabsichtigte Drehungen oder gar Herausfallen beim Transport zu sichern.

Schließlich brauchen die Aufnahmebehälter 5 nicht unbedingt, wie beschrieben, bereits vor der Stapelbildung in ihre Position gebracht werden. Möglich wäre vielmehr auch, die Aufnahmebehälter durch eine im Erdboden angebrachte Öffnung und mittels einer Hebebühne oder dergleichen von einem tiefer gelegenen Stockwerk aus erst dann in die benötigte Position zu bringen, wenn die Stapelbildung bereits abgeschlossen ist. Hierdurch wurde sich der weitere Vorteil ergeben, daß die Stapel der Flächenbauteile 16 unabhängig davon gebildet werden können, ob gerade ein Aufnahmebehälter vorhanden ist oder nicht.

## Patentansprüche

1. Vorrichtung mit einer zur Bildung eines Stapels von Flächenbauteilen (16) bestimmten Einrichtung, die mehrere Stapelköper (1a,b) enthält, die in einer Be- und/oder Entladestation angeordnet und in dieser auf in Richtung (w) eines Stapelbereichs vor- und zurückschiebbar gelagerten Tragkörpern (4a,b) montiert sind sowie jeweils mehrere übereinander angeordnete Aufnahmeelemente (14) aufweisen, die in einer Arbeitsstellung, in der sie bis in den Stapelbereich ragen, und in einer Außerarbeitsstellung, in der sie nicht bis in den Stapelbereich ragen, angeordnet werden können, und mit einem zum Lagern und Transportieren des Stapels von Flächenbauteilen (16) bestimmten Aufnahmebehälter (5), der als eine von der Be- und/oder Entladestation getrennte Baueinheit ausgebildet und mit mehreren Ablagekörpern (8a,b) versehen ist, die im Abstand der Aufnahmeelemente (14) angeordnete, bis in den Stapelbereich vorbewegbare bzw. aus diesem zurückbewegbare Tragelemente (12) aufweisen, dadurch gekennzeichnet, daß die Tragkörper (4a,b) mit je einem mit einem zugeordneten Ablagekörper (8a,b) koppelbaren und zur Herbeiführung der Vor- und Zurückbewegung bestimmten Betätigungsmechanismus (20-23, 26-29) versehen sind.

2. Vorrichtung nach Anspruch 1, dadurch gekennzeichnet, daß die Tragelemente (12) starr an den Ablagekörpern (8a,b) befestigt sind und die Ablagekörper (8a,b) zwecks Vor- und Zurückbewegung der Tragelemente (12) bewegbar am Aufnahmebehälter (5) gelagert sind.

3. Vorrichtung nach Anspruch 1 oder 2, dadurch gekennzeichnet, daß die Ablagekörper (8a,b) in Bohrungen (11) des Aufnahmebehälters (5) eingesetzt sind.

4. Vorrichtung nach einem der Ansprüche 1 bis 3, dadurch gekennzeichnet, daß die Tragkörper (4a,b) auf Schritten (2a,b) montiert sind, die in einer der Richtungen (v,w) verschiebbar in der Be- und/oder Entladestation gelagert sind.

5. Vorrichtung nach Anspruch 4, dadurch gekennzeichnet, daß auf wenigstens einem Schritten (2a,b) ein Träger (31) montiert ist, der einen zum Versetzen der Ablagekörper (8a,b) bestimmten Greifer (36) aufweist.

6. Vorrichtung nach einem der Ansprüche 3 bis 5, dadurch gekennzeichnet, daß die Ablagekörper (8a,b) drehbar in den Bohrungen (11) gelagert sind.

7. Vorrichtung nach einem der Ansprüche 1 bis 6, dadurch gekennzeichnet, daß die Stapelkörper (1a,b) aus Klinkensäulen und die Aufnahmeelemente (14) aus Klinken bestehen, die zwecks Herstellung der Arbeits- bzw. Außerarbeitsstellung schwenkbar an den Klinkensäulen gelagert sind.

8. Vorrichtung nach einem der Ansprüche 1 bis 7, dadurch gekennzeichnet, daß die Klinkensäulen (1a,b) zusätzlich parallel zu ihren Achsen verschiebbar gelagert sind.

9. Vorrichtung nach einem der Ansprüche 1 bis 8, dadurch gekennzeichnet, daß die Tragkörper (4a,b) in zwei zueinander und zu den Achsen der Klinkensäulen (1a,b) senkrechten Richtungen (v,w) verschiebbar in der Be- und/oder Entladestation gelagert sind.

10. Aufnahmebehälter zum Lagern und Transportieren eines Stapels von horizontal und übereinander angeordneten, einen Stapelbereich festlegenden Flächenbauteilen (16) mit einem Bodenteil (6) und mit mehreren vertikal auf diesem angeordneten und einander gegenüberliegenden Ablagekörpern (8a,b), die zur horizontalen Lagerung der Flächenbauteile (16) bestimmte Tragelemente (12) aufweisen, die in einem dem Abstand der Flächenbauteile im Stapel entsprechenden Abstand übereinander angeordnet und zwecks Aufnahme bzw. Übergabe des Stapels bis in den Stapelbereich vorbewegbar bzw. aus diesem zurückbewegbar sind, dadurch gekennzeichnet, daß die Ablagekörper (8a,b) Betätigungselemente (24,25) aufweisen, die mit einem zur Herbeiführung der Vor- und Zurückbewegung bestimmten, einer Be- und Entladestation zugeordneten Betätigungsmechanismus (20-23, 26-29) koppelbar sind.

11. Aufnahmebehälter nach Anspruch 10, dadurch gekennzeichnet, daß die Tragelemente (12) starr an den Ablagekörpern (8a,b) befestigt und die Ablagekörper (8a,b) zwecks Vor- und Zurückbewegung der Tragelemente (12) bewegbar am Bodenteil (6) gelagert sind.

12. Aufnahmebehälter nach Anspruch 10 oder 11, dadurch gekennzeichnet, daß das Bodenteil (6) eine Vielzahl von Bohrungen (16) zur drehbaren Lagerung der Ablagekörper (8a,b) aufweist und die Ablagekörper (8a,b) wahlweise in die Bohrungen (11) einsteckbar sind.

13. Aufnahmebehälter nach Anspruch 12, dadurch gekennzeichnet, daß Mittel (41) zur Drehsicherung der Ablagekörper (8a,b) vorgesehen sind.

14. Aufnahmebehälter nach einem der Ansprüche 10 bis 13, dadurch gekennzeichnet, daß wenigstens einer der Ablagekörper (8a,b) mit einem zur Verhinderung des Herausfallens der Flächenbauteile (16) bestimmten Sicherungselement (39) versehen ist.

## Claims

1. Device with a unit to build a stack of flat parts (16) comprising several stacking means (1a,b) arranged in a loading and/or unloading station and mounted therein on support means (4a,b) disposed to slide back and forth in the manner of a reciprocating movement in the direction (w) of a stacking area, and each having several receiving elements (14) arranged one above the other, which may be arranged in an operative position, in which they project into the stacking area, and in a non-operative position, in which they do not project into said stacking area; and with a holder (5) for storing and transporting the stack of flat parts (16), which is a separate component from said loading and/or unloading station and is provided with several delivery means (8a,b) with support elements (12), which are spaced from said receiving elements (14) and may be moved back and forth in a reciprocating manner into and out of said stacking area, characterised in that said support means (4a,b) are each provided with an operating mechanism (20-23, 26-29), which may be connected to an associated delivery means (8a,b) to actuate said reciprocating movement.

2. Device according to Claim 1, characterised in that the support elements (12) are rigidly secured to the delivery means (8a,b) and said delivery means (8a,b) are movably disposed on the holder (5) for the reciprocating movement of said support elements (12).

3. Device according to Claim 1 or 2, characterised in that the delivery means (8a,b) are inserted into holes (11) in the holder (5).

4. Device according to one of Claims 1 to 3, characterised in that the support means (4a,b) are mounted on sliding carriages (2a,b) disposed in a loading and/or unloading station, which may be moved in one of directions (v,w).

5. Device according to Claim 4, characterised in that at least one of the sliding carriages (2a,b) has a carrier (31) mounted on it with a gripping means (36) to displace the delivery means (8a,b).

6. Device according to one of Claims 3 to 5, characterised in that the delivery means (8a,b) are rotatably mounted in holes (11).

7. Device according to one of Claims 1 to 6, characterised in that the stacking means (1a,b) comprise ratchet columns and the receiving means (14) comprise ratchets, which are pivoted to said ratchet columns to create the operative or non-operative position.

8. Device according to one of Claims 1 to 7, characterised in that ratchet columns (1a,b) are additionally arranged to slide parallel to their axes.

9. Device according to one of Claims 1 to 8, characterised in that the supporting means (4a,b) are arranged in the loading and/or unloading station to slide in two directions (v,w) vertical to one another and vertical to the axes of the ratchet columns (1a,b).

10. Holder for storing and transporting a stack of horizontal flat parts (16) arranged one above the other and constituting a stacking area, having a base section (6) and several delivery means (8a,b) arranged vertically thereon and lying opposite one another, and provided with supporting elements (12) for the horizontal arrangement of said flat parts (16), said supporting elements (12) being arranged one above the other spaced at a distance corresponding to that of the flat parts in the stack and being movable back and forth in a reciprocating manner into and out of the stacking area to receive or deliver the stack, characterised in that the delivery means (8a,b) are provided with operating elements (24, 25) which may be coupled to an operating mechanism (20-23, 26-29) connected to a loading and unloading station to actuate said reciprocating movement.

11. Holder according to Claim 10, characterised in that the supporting elements (12) are rigidly secured to the delivery means (8a,b) and said delivery means (8a,b) are movably disposed on the base section (6) for the reciprocating movement of said support elements (12).

12. Holder according to Claim 10 or 11, characterised in that the base section (6) has a plurality of holes (16) for the rotatable arrangement of the delivery means (8a,b) and the delivery means (8a,b) may selectively be inserted into holes (11).

13. Holder according to Claim 12, characterised in that means (41) for locking rotation of the delivery means (8a,b) are provided.

14. Holder according to one of Claims 10 to 13, characterised in that at least one of the delivery means (8a,b) is provided with a safety element (39) to prevent the flat parts (16) from falling out.

## Revendications

1. Dispositif avec un système pour la formation d'une pile de pièces plates (16), comprenant une pluralité de corps d'empilage (1a, b) qui sont installés dans une station de chargement et/ou de déchargement, montés dans celle-ci sur des corps de support (4a, b) de manière à pouvoir être déplacés vers l'avant et vers l'arrière en direction (w) d'une zone d'empilage, munis à chaque fois de plusieurs éléments de réception (14) superposés et peuvent être disposés dans une position de repos dans laquelle ils ne dépassent pas dans la zone d'empilage, et un récipient de réception (5) pour le stockage et le transport de la pile de pièces plates (16), lequel est réalisé sous la forme d'une unité séparée de la station de chargement et/ou de déchargement et muni de plusieurs corps receveurs (8a, b) lesquels comportent des éléments de support (12) disposés à distance des éléments de réception (14) et pouvant être avancés jusque dans la zone d'empilage ou retirés de celle-ci, **caractérisé en ce** que les corps de support (4a, b) sont équipés chacun d'un mécanisme de commande (20 à 23, 26 à 29) pouvant être couplé avec un corps receveur (8a, b) associé et destiné à déclencher le mouvement en avant et en arrière.

2. Dispositif selon la revendication 1, caractérisé en ce que les éléments de support (12) sont solidarisés avec les corps receveurs (8a, b) et que lesdits corps receveurs (8a, b) sont montés mobiles sur le récipient de réception (5) pour permettre le mouvement en avant et en arrière des éléments de support (12).

3. Dispositif selon l'une des revendications 1 ou 2, caractérisé en ce que les corps receveurs (8a, b) sont insérés dans des alésages (11) du récipient de réception (5).

4. Dispositif selon l'une des revendications 1 à 3, caractérisé en ce que les corps de support (4a, b) sont montés sur des chariots (2a, b) lesquels sont montés dans la station de chargement et/ou de déchargement de manière à pouvoir être déplacés dans l'une des directions (v, w).

5. Dispositif selon la revendication 4, caractérisé en ce que sur au moins un chariot (2a, b) est monté un support (31) équipé d'une griffe (36) servant au déplacement des corps receveurs (8a, b).

6. Dispositif selon l'une des revendications 3 à 5, caractérisé en ce que les corps receveurs (8a, b) sont montés de manière tournante dans les alésages (11).

7. Dispositif selon l'une des revendications 1 à 6, caractérisé en ce que les corps d'empilage (1a, b) sont constitués par des colonnes à cliquet et que les éléments de réception (14) sont conformés en cliquets qui, pour l'établissement de la position de travail et respectivement de la position de repos, sont montés de manière pivotante sur les colonnes à cliquet.

8. Dispositif selon l'une des revendications 1 à 7, caractérisé en ce que les colonnes à cliquet (1a, b) sont montées de manière à pouvoir en plus être déplacées parallèlement par rapport à leurs axes.

9. Dispositif selon l'une des revendications 1 à 8, caractérisé en ce que les corps de support (4a, b) sont montés dans la station de chargement et/ou de déchargement de manière à pouvoir être déplacés dans deux directions (v, w) perpendiculaires l'une par rapport à l'autre et par rapport aux axes des colonnes à cliquet (1a, b).

10. Récipient de réception pour le stockage et le transport d'une pile de pièces plates (16) disposées horizontalement les unes au-dessus des autres et définissant une zone d'empilage, comprenant un élément de fond (6) et une pluralité de corps receveurs (8a, b) placés verticalement sur celui-ci et en face les uns des autres, qui comportent des éléments de support (12) destinés au stockage horizontal des pièces plates (16), disposés les uns au-dessus des autres à une distance correspondant à l'écartement des pièces plates dans la pile et pouvant être déplacés vers l'avant ou vers l'arrière jusque dans la zone d'empilage en vue de la réception ou du transfert de la pile, caractérisé en ce que les corps receveurs (8a, b) comprennent des éléments de manoeuvre (24, 25) qui peuvent être couplés avec un mécanisme de commande (20 à 23, 26 à 29) associé à une station de chargement et/ou de déchargement et destiné à déclencher le mouvement en avant et en arrière.

11. Récipient de réception selon la revendication 10, caractérisé en ce que les éléments de support (12) sont solidarisés avec les corps receveurs (8a, b) et que lesdits corps receveurs (8a, b) sont montés mobiles sur l'élément de fond (6) pour permettre le mouvement en avant et en arrière des éléments de support (12).

12. Récipient de réception selon l'une des revendications 10 ou 11, caractérisé en ce que l'élément de fond (6) présente une multiplicité d'alésages (16) pour le montage tournant des corps receveurs (8a, b) et que lesdits corps receveurs (8a, b) peuvent être introduits, au choix, dans les alésages (11).

13. Récipient de réception selon la revendication 12, caractérisé en ce qu'il comprend des moyens (41) pour le blocage en rotation des corps receveurs (8a, b).

14. Récipient de réception selon l'une des revendications 10 à 13, caractérisé en ce qu'au moins l'un des corps receveurs (8a, b) est muni d'un élément de sécurité (39) qui empêche les pièces plates (16) de tomber.
